# EUROPÄISCHE PATENTSCHRIFT

(11) **EP 3 468 013 B1**
(45) Veröffentlichungstag und Bekanntmachung des Hinweises auf die Patenterteilung: **13.01.2021**
(21) Anmeldenummer: 18000752.8
(22) Anmeldetag: 24.09.2018
(51) Int. Cl.: H02K 11/40

(54) **WELLENERDUNGSRING SOWIE ABLEITKÖRPER FÜR EINEN WELLENERDUNGSRING**
SHAFT GROUNDING RING AND DISCHARGE BODY FOR A SHAFT GROUNDING RING
ANNEAU DE MISE À LA TERRE D'ARBRE AINSI QUE CORPS DE DRAIN POUR UN ANNEAU DE MISE À LA TERRE D'ARBRE

(30) Priorität: 06.10.2017 DE 102017009360
(43) Veröffentlichungstag der Anmeldung: 10.04.2019
(73) Patentinhaber: KACO GmbH + Co. KG, 74912 Kirchardt (DE)
(72) Erfinder: van Bezooijen, Lucas, 74239 Hardthausen (DE)
(74) Vertreter: Kohl, Karl-Heinz

(56) Entgegenhaltungen:
- DE-A1- 10 152 360
- DE-A1-102013 206 400
- DE-A1-102016 010 926
- DE-U1- 20 021 796
- JP-A- 2008 017 664
- US-A1- 2015 349 477

## Beschreibung

Die Erfindung betrifft einen Wellenerdungsring nach dem Oberbegriff des Anspruches 1 sowie einen Ableitkörper für einen Wellenerdungsring nach dem Oberbegriff des Anspruches 15.

Elektromotoren induzieren frequenzveränderliche Störspannungen auf der Antriebswelle. Sie können unter anderem die Motorlager zerstören oder Probleme bezüglich EMV verursachen, wie zum Beispiel Störungen des Radioempfangs. Die Wellenströme verursachen an den Laufflächen und den Lagerkugeln der Motorlager kleine Schmelzkrater, die dazu führen, dass die Lagerlauffläche mit der Zeit mit Vertiefungen durchsetzt ist und das Motorlager schließlich ausfällt.

Um die elektrischen Ladungen bzw. Spannungen von der Motorwelle abzuleiten, sind Wellenerdungsringe bekannt (EP 1 872 463 B1), die als Ableitelemente Filamente aufweisen, die zwischen zwei Platten befestigt sind und radial nach innen über diese Platten vorstehen. Die Platten und die Filamente werden von einem ringförmigen Gehäuse aufgenommen, das elektrisch leitend mit einem geerdeten Gehäuse verbunden ist. Die Verwendung der leitfähigen Filamente erfordert eine aufwändige und dementsprechend teure Herstellung des Wellenerdungsringes. Im Einsatz besteht zudem die Gefahr, dass sich die Filamente lösen und zu einer Verunreinigung und gegebenenfalls zu Schäden des gesamten Systems bis hin zu einem Gesamtausfall des Systems führen. Problematisch ist auch ein Drehrichtungswechsel der Welle, da die Filamente die Drehrichtungsumkehr nur schwierig durch entsprechende Verstellung nachvollziehen können.

Es sind weiter Wellenerdungsringe bekannt (DE 10 2016 010 926 A1), bei denen das Ableitelement mit einem scheibenförmigen, aus elektrisch leitendem Material bestehenden Ableitkörper gebildet ist. Der Ableitkörper hat einen elastisch biegbaren Randbereich, mit dem er mit der Motorwelle elektrisch leitend verbunden ist.

Der Erfindung liegt die Aufgabe zugrunde, den gattungsgemäßen Wellenerdungsring und den gattungsgemäßen Ableitkörper so auszubilden, dass die Ableitung von induzierten Spannungen bzw. Ladungen von der Welle verbessert wird.

Diese Aufgabe wird beim gattungsgemäßen Wellenerdungsring erfindungsgemäß mit den kennzeichnenden Merkmalen des Anspruches 1 und beim gattungsgemäßen Ableitkörper erfindungsgemäß mit den kennzeichnenden Merkmalen des Anspruches 15 gelöst.

Der erfindungsgemäße Wellenerdungsring hat den Ableitkörper mit dem Ringabschnitt, von dem die elastisch verformbaren, laschenförmigen Abschnitte abstehen, die unterschiedliche Länge haben. Die unterschiedlich langen Abschnitte bilden in der Einbaulage des Wellenerdungsringes unterschiedliche Laufspuren an der Welle. Durch die unterschiedlich langen Abschnitte wird die Kontaktfläche zwischen dem Ableitkörper und der Welle stark erhöht, wodurch auch eine besonders gute Ableitung dieser Spannungen bzw. Ladungen gewährleistet wird. Hat der Ableitkörper beispielsweise Abschnitte mit zwei unterschiedlichen Längen, dann ergeben sich zwei Laufspuren auf der Welle mit einer entsprechend erhöhten Kontaktfläche. Der Flächenkontakt zur drehenden Welle wird dabei dabei deutlich erhöht. Der mehrspurige Wellenkontakt führt zu einem geringeren Abrieb auf der Gegenlauffläche der jeweiligen Laufspur sowie zu einer längeren Beständigkeit des Bauteiles. Da die Abschnitte auf unterschiedliche Laufspuren aufgeteilt sind, ist auch die Wärmeentwicklung pro Laufspur entsprechend geringer. Die unterschiedlichen Laufspuren stellen auch langfristig eine bessere Ableitung der induzierten Spannungen bzw. elektrischen Ladungen sicher.

Die Verwendung unterschiedlich langer Abschnitte bringt den Vorteil mit sich, dass diese Abschnitte so ausgebildet werden können, dass sie mit unterschiedlich hohen Anpresskräften auf der Welle aufliegen.

Vorteilhaft sind die unterschiedlich langen Abschnitte über den Umfang des Ringabschnittes gleichmäßig verteilt angeordnet. Dadurch ergibt sich über den Umfang des Ableitkörpers bzw. der Welle eine gleichmäßige Ableitung der Spannungen bzw. Ladungen.

Bei einer einfachen Ausführungsform sind die ungleich langen Abschnitte abwechselnd hintereinander angeordnet. So können in Umfangsrichtung hintereinander abwechselnd ein langer, ein kurzer, ein langer Abschnitt usw. vorgesehen sein.

Es ist aber auch möglich, beispielsweise in Umfangsrichtung hintereinander zwei lange, einen kurzen, zwei lange, einen kurzen Abschnitt usw. vorzusehen.

Schließlich kann der Ableitkörper auch so gestaltet sein, dass die unterschiedlich langen Abschnitte nicht in gleichmäßiger Verteilung über den Umfang vorgesehen sind.

Die gleichmäßige Verteilung der ungleich langen Abschnitte vereinfacht die Herstellung des Ableitkörpers.

Bei einer ersten vorteilhaften Ausführungsform liegen die Abschnitte in wenigstens zwei unterschiedlichen Längen vor. Es ist aber auch möglich, dass die Abschnitte des Ableitkörpers mehr als zwei unterschiedliche Längen haben. Dann ergibt sich auch eine entsprechende Zahl von Laufspuren an der Welle.

Eine kostengünstige und einfache Herstellung des Ableitkörpers sowie eine gleichmäßige Ableitung der Spannungen bzw. Ladungen ergeben sich, wenn die Abschnitte der jeweils gleichen Länge untereinander gleich gestaltet sind.

Die unterschiedlich langen Abschnitte stehen vorteilhaft radial vom Ringabschnitt ab.

Eine einfache und kostengünstige Herstellung des Wellenerdungsringes bei gleichzeitig guten Ableiteigenschaften ergibt sich, wenn der Ringabschnitt und die Abschnitte einstückig miteinander ausgebildet sind.

Der Ableitkörper ist vorteilhaft so ausgebildet, dass die ungleich langen Abschnitte nicht nur in der Einbaulage des Wellenerdungsringes, sondern auch im nicht eingebauten, also im unverformten Zustand des Ableitkörpers, Abstand voneinander haben. Dadurch ist sichergestellt, dass die ungleich langen Abschnitte beim Einbau des Wellenerdungsringes ungehindert voneinander elastisch verformt werden können.

Der Ableitkörper besteht bei einer bevorzugten Ausführungsform aus elektrisch leitendem PTFE. Die elektrische Leitfähigkeit ergibt sich durch entsprechende elektrisch leitfähige Füllstoffe im PTFE.

Es besteht zusätzlich die Möglichkeit, den Ableitkörper vollständig mit einer elektrisch leitenden Beschichtung zu umgeben, die beispielsweise Silberlack ist.

Bei Verwendung einer solchen elektrisch leitenden Beschichtung kann der Ableitkörper selbst auch aus einem Material bestehen, das selbst nicht oder schlecht leitfähig ist. Für diesen Fall kann der Ableitkörper beispielsweise aus Polyfluorcarbon, insbesondere PTFE, bestehen.

Die elektrisch leitende Beschichtung kann auch eine elektrisch leitfähige Folie sein, die ein kostengünstiges Bauteil ist. Die Folie kann beispielsweise eine Kupferfolie sein. Solche Folien haben nur geringe Dicken von beispielsweise etwa nur 0,03 mm. Die Verbindung einer solchen elektrisch leitfähigen Folie mit dem Ableitkörper kann in jeder geeigneten Weise vorgenommen werden, beispielsweise durch ein geeignetes Klebemittel.

Damit in der Einbaulage die unterschiedlich langen Abschnitte zuverlässig elastisch gebogen werden können, ist es von Vorteil, wenn zumindest ein Teil der Abschnitte mit einem Gelenk versehen ist. Es stellt sicher, dass die entsprechenden Abschnitte in erforderlichem Maße elastisch verformt werden können.

Vorteilhaft sind alle Abschnitte des Ableitkörpers mit einem solchen Gelenk versehen.

Das Gelenk wird vorteilhaft durch eine Querschnittsschwächung gebildet, die beispielsweise durch einen Präge- oder einen Drehvorgang erzeugt werden kann.

Bei einer einfachen Ausführungsform haben die unterschiedlich langen Abschnitte näherungsweise rechteckförmige Umrissform.

Bei einer anderen Ausführung können diese ungleich langen Abschnitte im Umriss auch etwa T-Form haben.

Darüber hinaus kann der Ableitkörper auch so gestaltet sein, dass die unterschiedlich langen Abschnitte des Ableitkörpers unterschiedliche Umrissformen haben. So können beispielsweise die langen Abschnitte T-förmigen Umriss und die kurzen Abschnitte rechteckförmigen Umriss oder umgekehrt haben. Selbstverständlich können die Abschnitte auch andere geeignete Umrissformen aufweisen.

Bei einer T-förmigen Umrissform haben die Abschnitte einen Steg, der sich in Umfangsrichtung des Ableitkörpers erstreckt.

Eine gute Ableitung und eine große Kontaktfläche bei kompakter Ausbildung des Ableitkörpers ergibt sich, wenn die kurzen, T-förmigen Abschnitte zwischen den langen, T-förmigen Abschnitten so angeordnet sind, dass die Stege der kurzen Abschnitte von den Stegen der benachbarten langen Abschnitte radial überdeckt sind.

Der Wellenerdungsring kann grundsätzlich in zwei Einbaulagen vorgesehen werden. In der einen Einbaulage liegen die ungleich langen Abschnitte unter elastischer Verformung an der Welle an. Das ringförmige Gehäuse des Wellenerdungsringes ist dann elektrisch leitend mit dem ableitenden Maschinenelement, beispielsweise einem Gehäuse eines Motorlagers, verbunden.

In der anderen Einbaulage sitzt das elektrisch leitende Gehäuse des Wellenerdungsringes drehfest auf der Welle, während die ungleich langen Abschnitte an dem Gehäuse des Maschinenbauteiles elektrisch leitend anliegen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Die Erfindung wird anhand zweier in den Zeichnungen dargestellter Ausführungsformen näher erläutert. Es zeigen
- Fig. 1: in Ansicht eine erste Ausführungsform eines erfindungsgemäßen Ableitkörpers eines erfindungsgemäßen Wellenerdungsringes,
- Fig. 2: in Ansicht eine zweite Ausführungsform eines erfindungsgemäßen Ableitkörpers eines erfindungsgemäßen Wellenerdungsringes,
- Fig. 3: in vergrößerter Darstellung einen Halbschnitt des erfindungsgemäßen Wellenerdungsringes.

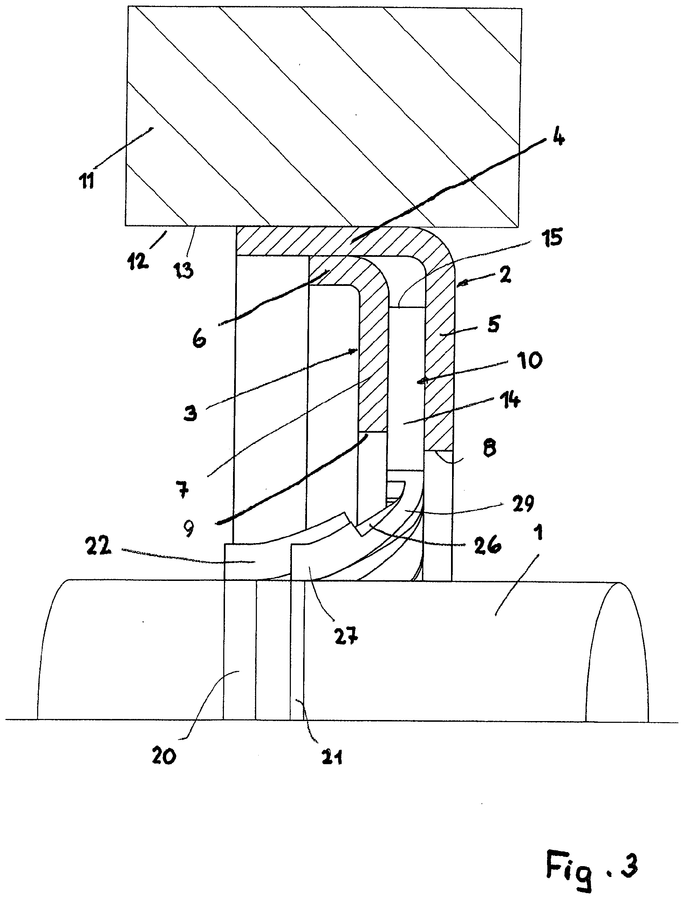

Es ist bekannt, dass umrichterbetriebene Wechselstrommotoren schädliche Spannungen auf der Motorwelle 1 (Fig. 3) induzieren. Überschreitet die Spannung den Widerstand des Schmierstoffes in einem Wellenlager, entladen sich die Spannungen über das Wellenlager, das dadurch stark beansprucht und bei längerem Einsatz beschädigt wird. Mit den Wellenerdungsringen werden die induzierten schädlichen Spannungen in der Motorwelle 1 zuverlässig abgeleitet, so dass die Spannungen nicht mehr über die Wellenlager abgeleitet werden.

Die Wellenerdungsringe können aber nicht nur bei Motoren, sondern beispielsweise auch bei Getrieben eingesetzt werden. Allgemein werden die Wellenerdungsringe dort eingesetzt, wo induzierte Spannungen, Ströme oder elektrische Ladungen von Wellen abgeleitet werden sollen.

Der Wellenerdungsring hat einen äußeren, aus elektrisch leitendem Material bestehenden, ein Gehäuse bildenden Klemmring 2, der im Axialschnitt L-förmigen Querschnitt hat. Der Klemmring 2 umgibt einen inneren Klemmring 3, der ebenfalls aus elektrisch leitendem Material besteht und im Axialschnitt L-förmigen Querschnitt aufweist. Der Klemmring 2 hat einen zylindrischen Mantel 4, der in einen senkrecht zu ihm nach innen verlaufenden Radialflansch 5 übergeht. Der Klemmring 3 hat ebenfalls einen zylindrischen Mantel 6, der in einen nach innen verlaufenden Radialflansch 7 übergeht. Beide Ringflansche 5, 7 weisen mittig eine Durchgangsöffnung 8, 9 für die Welle 1 auf.

Der Radialflansch 5 des äußeren Klemmringes 2 hat eine größere Breite als der Radialflansch 7 des inneren Klemmringes 3. Der Mantel 4 des äußeren Klemmringes 2 überragt den Mantel 6 des inneren Klemmringes 3. Der innere Klemmring 3 liegt mit seinem Mantel 6 unter Presssitz an der Innenseite des Mantels 4 des äußeren Klemmringes 2 an.

Mit den beiden Klemmringen 2, 3, die vorteilhaft aus Metall bestehen, wird ein Ableitelement in Form eines scheibenförmigen Ableitkörpers 10 axial eingeklemmt. Er besteht aus elektrisch leitendem Material, vorzugsweise aus einem leitfähigen PTFE. Grundsätzlich kann der Ableitkörper 10 aus jedem geeigneten, elektrisch leitfähigen Material bestehen, mit dem die induzierten Spannungen von der Welle 1 auf ein geerdetes Gehäuse 11 abgeleitet werden können. Die bevorzugte Verwendung von leitfähigem PTFE hat den Vorteil, dass dieser kompakte Werkstoff chemisch und thermisch beständig ist und nur eine geringe Reibung aufweist. Zwischen den beiden Radialflanschen 5, 7 der Klemmringe 2, 3 wird der Ableitkörper 10 zuverlässig eingeklemmt.

Der Ableitkörper 10 kann im Bereich zwischen den beiden Radialflanschen 5, 7 zusätzlich mit einem Klebemittel, das vorteilhaft elektrisch leitend ist, mit dem Radialflansch 5 und/oder dem Radialflansch 7 verbunden sein.

Der Wellenerdungsring ist in einen Einbauraum 12 des nur schematisch dargestellten Gehäuses 11 mit Presssitz so eingesetzt, dass der Mantel 4 des äußeren Klemmringes 2 mit Pressung an einer Innenwand 13 des Einbauraumes 12 des Gehäuses 11 anliegt. Das Gehäuse 11 selbst ist geerdet, so dass die Spannung von der Welle 1 über den Ableitkörper 10 und den äußeren Klemmring 2 auf das geerdete Gehäuse 11 abgeleitet werden kann.

Der Klemmring 2 muss nicht zwingend in einen Einbauraum eingepresst werden, sondern kann beispielsweise über quer abstehende Laschen an einem geerdeten Bauteil befestigt sein. Auch ist es möglich, den Klemmring 2 direkt an ein geerdetes Bauteil anzuschrauben. Es ist lediglich im Ausführungsbeispiel das Motorgehäuse. Die Ableitung der Spannungen kann auch über andere Bauteile erfolgen, die entsprechend geerdet sind.

Der ringförmige Ableitkörper 10 hat einen äußeren Ring 14, der über den größten Teil seiner radialen Breite zwischen den Radialflanschen 5, 7 der Klemmringe 2, 3 axial eingeklemmt ist. Der radial äußere Rand 15 des Ringes 14 hat Abstand vom Übergang des Radialflansches 5, 7 in den Mantel 4, 6 der Klemmringe 2, 3. Radial nach innen steht der Ring 14 über beide Radialflansche 5, 7 vor. Damit der Ableitkörper 10 zuverlässig zwischen den Klemmringen 2, 3 eingeklemmt werden kann, hat der Ring 14 über seinen Umfang sowie seine radiale Breite konstante Dicke.

Radial nach innen stehen über den Ring 14 Abschnitte 16, 17 vor, die in radialer Richtung unterschiedlich lang sind und unter elastischer Verformung auf der Welle 1 aufliegen. Die Abschnitte 16, 17 liegen über dem Umfang des Ableitkörpers 10 mit Abstand hintereinander, so dass sie ohne Behinderung in der Einbaulage elastisch gegenüber dem Außenring 14 gebogen werden können.

Da der Ring 14 radial nach innen über den Rand der Durchgangsöffnungen 8, 9 vorsteht, können die Abschnitte 16, 17 ohne Behinderung durch den Rand der Durchgangsöffnungen 8, 9 in der Einbaulage des Wellenerdungsringes elastisch verformt werden.

Aufgrund der elastischen Verformung der Abschnitte 16, 17 wird erreicht, dass sie flächig auf der Welle 1 aufliegen und damit zuverlässig die Spannungen auf der Welle 1 ableiten können.

Die zwischen den Abschnitten 16, 17 befindlichen Schlitze 18, 19 sorgen dafür, dass die Abschnitte 16, 17 nicht mit einer zu hohen Kraft auf der Welle 1 aufliegen. Die Abschnitte 16, 17 und die Schlitze 18, 19 sind so ausgebildet, dass die Abschnitte 16, 17 einerseits mit ausreichender Radialkraft auf der Welle 1 aufliegen, andererseits aber nur mit einer solchen Kraft aufliegen, dass der Verschleiß der Abschnitte 16, 17 im Kontaktbereich mit der Welle 1 möglichst klein ist.

Die Verwendung von elektrisch leitfähigem PTFE für den Ableitkörper 10 hat den Vorteil, dass dieser Werkstoff einen sogenannten Memoryeffekt aufweist. Dies hat zur Folge, dass die vorzugsweise elastisch verformten Abschnitte 16, 17 bestrebt sind, wieder in ihre Ausgangslage zurückzukehren, auch wenn sie nicht nur elastisch gebogen sind. Dadurch ergibt sich eine Rückstellkraft, die einem möglichen Verschleiß der Abschnitte 16, 17 entgegenwirkt und dadurch eine über die Einsatzdauer konstante zuverlässige Berührung mit der Welle 1 gewährleistet.

Der aus elektrisch leitfähigem PTFE bestehende Ableitkörper 10 ermöglicht auch einen Drehrichtungswechsel der Welle 1. Es kommt nicht zu einem Aufstellen der Abschnitte 16, 17 bei einer Drehrichtungsumkehr der Welle 1.

Da die Abschnitte 16, 17 in Radialrichtung unterschiedlich lang sind, liegen sie auch an zwei unterschiedlichen Stellen auf der Welle 1 auf. Dadurch ergeben sich auf der Welle 1 zwei unterschiedliche Laufspuren 20, 21, die je nach radialer Länge der Abschnitte 16, 17 axialen Abstand voneinander haben.

Im Ausführungsbeispiel gemäß Fig. 3 ist die Laufspur 20 breiter als die Laufspur 21. Je nach Gestaltung der Abschnitte 16, 17 können die von ihnen erzeugten Laufspuren 20, 21 auch gleich breit sein. Auch ist es möglich, dass die Laufspur 20 schmaler ist als die Laufspur 21.

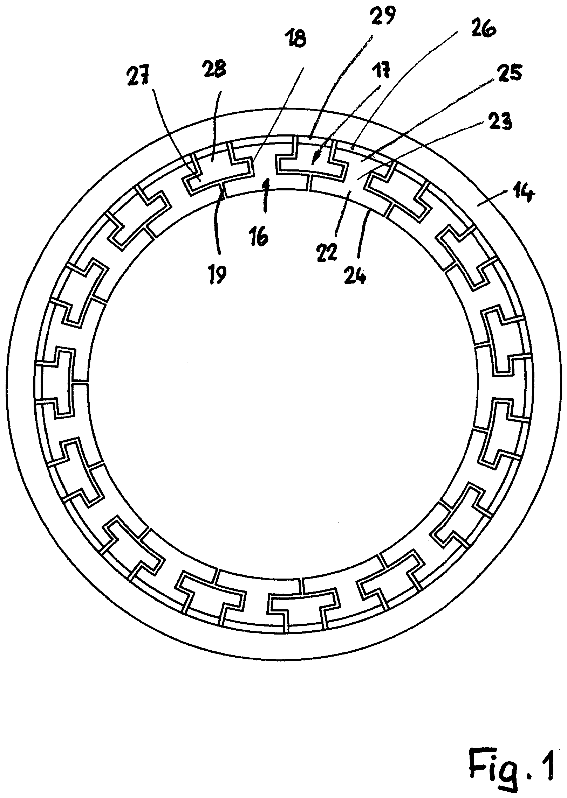

Bei der Ausführungsform gemäß Fig. 1 sind die Abschnitte 16, 17 jeweils T-förmig ausgebildet.

Die Abschnitte 16 haben einen Steg 22, der von einem radial verlaufenden Fuß 23 absteht. Der Steg 22 steht in Umfangsrichtung des Ableitkörpers 10 gleich weit über den Fuß 23 vor. Die Außenseite 24 des Steges 22 verläuft um die Achse des Ableitkörpers 10 gekrümmt.

Die radiale Dicke des Steges 22 ist beispielhaft geringer als die in Umfangsrichtung gemessene Breite des Fußes 23. In Radialrichtung ist der Fuß 23 außerdem breiter als der Steg 22. Dadurch verleiht der Fuß 23 dem Abschnitt 16 eine ausreichende Steifigkeit, während der verhältnismäßig dünne Steg 22 in der Einbaulage eine sichere Anlage an der Welle 1 und damit eine zuverlässige Ableitung der Spannungen von der Welle 1 gewährleistet.

Der Fuß 23 verbindet den radial innen liegenden Steg 22 mit einem radial außen liegenden Steg 25, der in Umfangsrichtung des Ableitkörpers 10 ebenfalls über den Fuß 23 übersteht. Der radial innere Steg 22 ist in Umfangsrichtung allerdings länger als der äußere Steg 25.

Am Übergang des Steges 25 in den geschlossenen Ringabschnitt 14 ist der Steg 25 zur Bildung eines Gelenkes 26 mit einer Materialverschwächung versehen, die sich über die gesamte Umfangslänge des Steges 25 erstreckt. Diese Querschnittsverschwächung kann durch einen Präge- oder einen Drehvorgang erreicht werden.

Durch das Gelenk 26 ist sichergestellt, dass sich der Abschnitt 16 zuverlässig elastisch biegen lässt. Mit dem Gelenk 26 kann auch die Anpresskraft des Abschnittes 16 bzw. seines Steges 22 an der Welle 1 eingestellt werden.

Der Präge-/Drehvorgang zur Bildung des Gelenkes 26 kann entfallen, wenn die in Umfangsrichtung gemessene Breite des inneren Steges 26 verhältnismäßig gering ist.

Die Abschnitte 16 sind in Umfangsrichtung des Ableitkörpers 10 so angeordnet, dass sie bei nicht verformtem Ableitkörper nur geringen Abstand voneinander haben, der durch die Breite des Schlitzes 19 bestimmt wird. Werden die Abschnitte 16 in der Einbaulage elastisch verformt, nimmt der Abstand zwischen in Umfangsrichtung benachbarten Abschnitten 16 entsprechend zu. Da beim dargestellten Ausführungsbeispiel die Stege 22 der Abschnitte 16 in Umfangsrichtung mit verhältnismäßig kleinem Abstand hintereinander liegen, werden die Spannungen auf der Welle 1 zuverlässig abgeleitet.

Die kürzeren Abschnitte 17 liegen zwischen benachbarten längeren Abschnitten 16. Die Abschnitte 17 sind T-förmig ausgebildet und haben den Steg 27, der vom radial nach innen verlaufenden Fuß 28 absteht. Im Unterschied zu den Abschnitten 16 schließt der Fuß 28 der Abschnitte 17 radial an den geschlossenen Ring 14 des Ableitkörpers 10 an. Am Übergang vom Fuß 28 in den Ring 14 ist ein Gelenk 29 vorgesehen, das im Ausführungsbeispiel durch eine Querschnittsverschwächung des Fußes 28 in diesem Bereich gebildet wird. Die Querschnittsverschwächung kann durch einen Präge- oder Drehvorgang erzeugt werden. Auf einen solchen Präge- / Drehvorgang kann dann verzichtet werden, wenn der Fuß 28 in Umfangsrichtung des Ableitkörpers 10 nur geringe Breite und/oder der Ableitkörper 10 relativ geringe Dicke hat.

Der Steg 27 der Abschnitte 17 ragt in den Bereich zwischen dem inneren Steg 22 und dem äußeren Steg 25 der beiden benachbarten längeren Abschnitte 16. Damit die beiden Abschnitte 16, 17 in der Einbaulage des Wellenerdungsringes sicher elastisch gebogen werden können, sind die beiden Abschnitte 16, 17 über ihren Umfang mittels der Schlitze 18 und 19 voneinander getrennt.

Der Fuß 28 des Abschnittes 17 liegt im Bereich zwischen den äußeren Stegen 25 der benachbarten Abschnitte 16.

Die Stege 27 der Abschnitte 17 sind in Umfangsrichtung des Ableitkörpers 10 kürzer als die radial inneren Stege 22 der Abschnitte 16. Der Fuß 28 ist in Umfangsrichtung breiter als der Fuß 23 der Abschnitte 16.

Da zwischen benachbarten Stegen 27 der kürzeren Abschnitte 17 der Fuß 23 der längeren Abschnitte 16 liegt, haben die Stege 27 in Umfangsrichtung des Ableitkörpers 10 größeren Abstand voneinander als die Stege 22 der längeren Abschnitte 16. Aufgrund der T-Form der kürzeren Abschnitte 17 ist gewährleistet, dass auch über die kürzeren Abschnitte 17 die Spannungen von der Welle 1 zuverlässig abgeführt werden.

Durch die unterschiedlich langen Abschnitte 16, 17 entsteht im Ausführungsbeispiel ein zweispuriger Wellenkontakt über die Laufspuren 20, 21. Durch diesen mehrspurigen Wellenkontakt ergibt sich eine erhöhte Kontaktfläche zwischen den Abschnitten 16, 17 und der Welle 1. Aufgrund der T-Form ergibt sich auch ein hoher Flächenkontakt pro Abschnitt 16, 17, da dieser mit dem Steg 22, 27 an der Welle 1 anliegt. Der Ableitkörper gewährleistet eine langfristig gute Ableitung der Spannungen von der Welle 1.

Bei der beschriebenen Ausführungsform sind die Abschnitte 16 untereinander gleich ausgebildet. Außerdem sind die unterschiedlich langen Abschnitte 16, 17 abwechselnd hintereinander angeordnet.

Bei einer anderen Gestaltung ist es möglich, dass in Umfangsrichtung hintereinander gleich lange Abschnitte 16 bzw. 17 vorgesehen sind. So können beispielsweise drei lange Abschnitte 16, daran anschließend drei kurze Abschnitte 17 und so weiter über den Umfang des Ableitkörpers 10 vorgesehen sein. Auch kann die Zahl der hintereinander liegenden, jeweils gleich langen Abschnitte 16, 17 variieren. Auf diese Weise kann der Wellenerdungsring an den vorgesehenen Anwendungsfall optimal angepasst werden.

Die Abschnitte 16, 17 erstrecken sich jeweils radial vom äußeren Ring 14 aus nach innen.

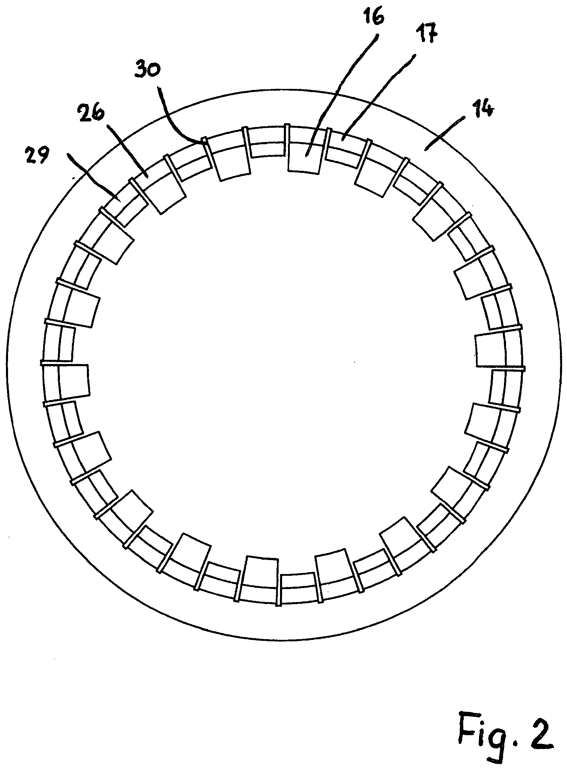

Beim Ableitkörper 10 gemäß Fig. 2 erstrecken sich die unterschiedlich langen Abschnitte 16, 17 vom äußeren, geschlossenen Ring 14 aus ebenfalls radial nach innen. Die Abschnitte 16, 17 sind als etwa rechteckige Zungen ausgebildet, die mit Abstand in Umfangsrichtung des Ableitkörpers 10 hintereinander abwechselnd angeordnet sind. Zwischen benachbarten längeren Abschnitten 16 liegen somit jeweils die kürzeren Abschnitte 17. Die Abschnitte 16, 17 sind voneinander durch radial verlaufende Schlitze 30 getrennt, so dass die Abschnitte 16, 17 problemlos elastisch in der Einbaulage des Wellenerdungsringes gebogen werden können.

Auch die zungenförmigen Abschnitte 16, 17 können mit den Gelenken 26, 29 versehen sein, um die elastische Verformung der Abschnitte 16, 17 zu erleichtern und insbesondere auch die Anpresskraft der Abschnitte 16, 17 an der Welle 1 zu beeinflussen. Die Gelenke 26, 29 können wie bei der vorigen Ausführungsform durch einen Präge- oder Drehvorgang erzeugt werden. Eine solche, durch den Präge-/Drehvorgang erzielte Querschnittsverringerung zur Bildung der Gelenke 26, 29 kann entfallen, wenn die Abschnitte 16, 17 in Umfangsrichtung nur eine geringe Breite haben. Dann lassen sich die Abschnitte 16, 17, wie auch bei der vorigen Ausführungsform, einfach elastisch biegen.

Wie beim vorigen Ausführungsbeispiel kann die Verteilung der langen und kurzen Abschnitte 16, 17 über den Umfang des Ableitkörpers 10 variiert werden.

Die beiden unterschiedlich langen Abschnitte 16, 17 ermöglichen den anhand von Fig. 1 beschriebenen mehrspurigen Wellenkontakt. Er hat den Vorteil, dass pro Laufspur 20, 21 nur eine geringe Wärmeentwicklung auftritt. Außerdem wird durch diesen zweispurigen Wellenkontakt eine langfristig gute Ableitung ermöglicht.

Die unterschiedlich langen Abschnitte 16, 17 der beschriebenen Ausführungsformen ermöglichen es auch, unterschiedlich hohe Anpresskräfte der Abschnitte 16, 17 auf der Welle 1 zu erzeugen. So ist es beispielsweise möglich, dass die längeren Abschnitte 16 unter einer geringeren Radialkraft auf der Welle 1 aufliegen als die kürzeren Abschnitte 17.

Der Ableitkörper 10 kann so gestaltet sein, dass er mehr als zwei Arten von unterschiedlich langen Abschnitten 16, 17 aufweist. Dann bilden sich auf der Welle 1 mehr als zwei Laufspuren 20, 21, die durch den Kontakt der elastisch gebogenen Abschnitte des Ableitkörpers 10 mit der Welle 1 gebildet werden. Der Flächenkontakt zwischen den Abschnitten und der Welle 1 wird bei einer solchen mehrspurigen Gestaltung nochmals vergrößert, so dass die Ableitung der Spannungen auf der Welle 1 erheblich verbessert werden kann.

Die für den Ableitkörper 10 vorteilhaft eingesetzte PTFE-Scheibe kann eine Dicke aufweisen, die bevorzugt in einem Bereich von 0,3/0,4 mm und etwa 1 mm liegt. Sofern die Abschnitte 16, 17 mit den Gelenken 26, 29 versehen sind, kann das Gelenk durch einen Prägevorgang, aber beispielsweise auch durch einen Drehvorgang vorgesehen werden. Im Bereich des Gelenkes 26, 29 hat der Ableitkörper 10 beispielhaft eine Dicke, die etwas mehr als die halbe Dicke des Ableitkörpers 10 beträgt.

Der Ableitkörper 10 kann mit einer Beschichtung aus elektrisch leitendem Material vollständig umgeben sein. Ein solches Material ist beispielsweise ein Silberlack, der sich dauerhaft fest aufbringen lässt. Als Beschichtung kann beispielsweise auch eine elektrisch leitfähige Folie verwendet werden, beispielsweise eine Kupferfolie, die beispielsweise aufgeklebt werden kann.

Aufgrund einer solchen Beschichtung muss das Material des Ableitkörpers 10 selbst nicht elektrisch leitfähig sein. Vorteilhaft ist es aber, wenn auch der Ableitkörper aus einem elektrisch leitfähigen Material hergestellt ist, vorzugsweise aus dem genannten leitfähigen PTFE.

Der Wellenerdungsring kann auch so ausgebildet werden, dass der Klemmring 2 mit seinem Mantel 4 fest auf der Welle 1 sitzt und die Abschnitte 16, 17 am geerdeten Gehäuse 11 unter elastischer Verformung anliegen.

Bei beiden Ausführungsformen können die Abschnitte 16, 17 beispielsweise durch Laserschneiden, Stanzen und dgl. erzeugt werden.

## Patentansprüche

1. Wellenerdungsring zur Ableitung induzierter Spannungen bzw. elektrischer Ladungen von einem ersten drehenden Maschinenelement (1), vorzugsweise einer Welle, in ein zweites ruhendes Maschinenelement (11), mit einem ringförmigen, aus elektrisch leitendem Material bestehenden Gehäuse (2), das mit dem einen der beiden Maschinenelemente (1,11) elektrisch leitend verbunden ist und mit wenigstens einem ringförmigen Ableitkörper (10) in elektrisch leitender Verbindung steht, der wenigstens teilweise aus einem elektrisch leitenden Material besteht und mit dem anderen der beiden Maschinenelemente (1,11) in elektrisch leitender Verbindung steht, **dadurch gekennzeichnet, dass** der Ableitkörper (10) einen Ringabschnitt (14) aufweist, von dem elastisch verformbare, laschenförmige Abschnitte (16, 17) abstehen, die in radialer Richtung unterschiedlich lang sind und in der Einbaulage unterschiedliche Laufspuren (20,21) am jeweiligen Maschinenelement (1, 11) bilden.

2. Wellenerdungsring nach Anspruch 1,
**dadurch gekennzeichnet, dass** die Abschnitte (16, 17) über den Umfang des Ringabschnittes (14) gleichmäßig verteilt angeordnet sind.

3. Wellenerdungsring nach Anspruch 1 oder 2,
**dadurch gekennzeichnet, dass** die ungleich langen Abschnitte (16, 17), die vorzugsweise in wenigstens zwei unterschiedlichen Längen vorliegen, abwechselnd hintereinander angeordnet sind.

4. Wellenerdungsring nach einem der Ansprüche 1 bis 3,
**dadurch gekennzeichnet, dass** die Abschnitte (16, 17) gleicher Länge untereinander gleich sind.

5. Wellenerdungsring nach einem der Ansprüche 1 bis 4,
**dadurch gekennzeichnet, dass** die Abschnitte (16, 17) radial vom Ringabschnitt (14) abstehen.

6. Wellenerdungsring nach einem der Ansprüche 1 bis 5,
**dadurch gekennzeichnet, dass** der Ringabschnitt (14) und die Abschnitte (16, 17) einstückig miteinander ausgebildet sind.

7. Wellenerdungsring nach einem der Ansprüche 1 bis 6,
**dadurch gekennzeichnet, dass** die Abschnitte (16, 17) in unverformtem Zustand Abstand voneinander haben.

8. Wellenerdungsring nach einem der Ansprüche 1 bis 7,
**dadurch gekennzeichnet, dass** der Ableitkörper (10) aus elektrisch leitendem PTFE besteht.

9. Wellenerdungsring nach einem der Ansprüche 1 bis 8,
**dadurch gekennzeichnet, dass** zumindest ein Teil der Abschnitte (16, 17) mit einem Gelenk (26, 29) versehen ist, das vorteilhaft durch eine Querschnittsverschwächung gebildet ist.

10. Wellenerdungsring nach einem der Ansprüche 1 bis 9,
**dadurch gekennzeichnet, dass** die Abschnitte (16, 17) etwa Rechteckform oder etwa T-Form haben.

11. Wellenerdungsring nach einem der Ansprüche 1 bis 10,
**dadurch gekennzeichnet, dass** die unterschiedlich langen Abschnitte (16, 17) unterschiedliche Umrissformen haben.

12. Wellenerdungsring nach Anspruch 10 oder 11,
**dadurch gekennzeichnet, dass** die T-förmigen Abschnitte (16, 17) einen Steg (22, 27) haben, der sich in Umfangsrichtung des Ringabschnittes (14) erstreckt.

13. Wellenerdungsring nach Anspruch 12,
**dadurch gekennzeichnet, dass** die kurzen, T-förmigen Abschnitte (17) zwischen den langen, T-förmigen Abschnitten (16) derart liegen, dass die Stege (27) der kurzen Abschnitte (27) von den Stegen (22) der benachbarten langen Abschnitte (16) radial überdeckt sind.

14. Wellenerdungsring nach einem der Ansprüche 1 bis 13,
**dadurch gekennzeichnet, dass** der Ableitkörper (10) aus nicht leitfähigem Material besteht und leitfähig beschichtet ist.

15. Ringförmiger Ableitkörper (10) für einen Wellenerdungsring nach einem der Ansprüche 1 bis 14, bestehend aus einem wenigstens teilweise elektrisch leitenden Material, mit einem Ringabschnitt (14),
**dadurch gekennzeichnet, dass** zur Bildung unterschiedlicher Laufspuren in Einbaulage (20,21) am jeweiligen Maschinenelement (1, 11) vom Ringabschnitt (14) elastisch verformbare, laschenförmige Abschnitte (16, 17) mit in radialer Richtung ungleicher Länge abstehen.

16. Ringförmiger Ableitkörper (10) nach Anspruch 15, **dadurch gekennzeichnet, dass** er eine Ausbildung entsprechend einem der Ansprüche 2 bis 14 aufweist.

## Claims

1. Shaft grounding ring for discharging induced voltages respectivly electric charges from a first rotating machine element (1), preferably a shaft, into a second stationary machine element (11), having an annular housing (2) consisting of electrically conducting material, which is connected to one of the other two machine elements (1, 11) in an electrically conducting manner and is electrically conductively connected to at least one annular discharge body (10), which at least partially consists of an electrically conducting material and is electrically conductively connected to the other of the two machine elements (1, 11),
**characterized in that** the discharge body (10) has an annular section (14), from which elastically deformable, flap-shaped sections (16, 17) project, which have different lengths in the radial direction and form different raceways (20, 21) on the respective machine element (1, 11) in the installation position.

2. Shaft grounding ring according to Claim 1,
**characterized in that** the sections (16, 17) are evenly distributed over the circumference of the annular section (14).

3. Shaft grounding ring according to Claim 1 or 2,
**characterized in that** the sections (16, 17) of unequal length, which are preferably of at least two different lengths, are arranged alternately one behind the other.

4. Shaft grounding ring according to any one of Claims 1 to 3,
**characterized in that** the sections (16, 17) of the same length are the same as each other.

5. Shaft grounding ring according to any one of Claims 1 to 4,
**characterized in that** the sections (16, 17) project radially away from the annular section (14).

6. Shaft grounding ring according to any one of Claims 1 to 5,
**characterized in that** the annular section (14) and the sections (16, 17) are formed in one piece with one another.

7. Shaft grounding ring according to any one of Claims 1 to 6,
**characterized in that** the sections (16, 17) are separated from each other in the undeformed state.

8. Shaft grounding ring according to any one of Claims 1 to 7,
**characterized in that** the discharge body (10) consists of electrically conducting PTFE.

9. Shaft grounding ring according to any one of Claims 1 to 8,
**characterized in that** at least one part of the sections (16, 17) is provided with a joint (26, 29), which is advantageously formed by a portion of reduced cross section.

10. Shaft grounding ring according to any one of Claims 1 to 9,
**characterized in that** the sections (16, 17) are, for example, rectangular or, for example, T-shaped.

11. Shaft grounding ring according to any one of Claims 1 to 10,
**characterized in that** the sections (16, 17) of different lengths have different contours.

12. Shaft grounding ring according Claim 10 to 11,
**characterized in that** the T-shaped sections (16, 17) have a web (22, 27) extending in a circumferential direction of the annular section (14).

13. Shaft grounding ring according to Claim 12,
**characterized in that** the short T-shaped sections (17) are positioned between the long T-shaped sections (16) in such a way that the webs (27) of the short sections (27) are radially covered by the webs (22) of the adjacent long sections (16).

14. Shaft grounding ring according to any one of Claims 1 to 13,
**characterized in that** the discharge body (10) is made of non-conductive material and has a conductive coating.

15. Annular discharge body (10) for a shaft grounding ring, according to any one of Claims 1 to 14, consisting of at least partially electrically conducting material, with an annular section (14),
**characterized in that** to form different raceways in the installation position (20, 21) on the respective machine element (1, 11), elastically deformable, flap-shaped sections (16, 17) of unequal length in the radial direction project away from the annular section (14).

16. Annular discharge body (10) according to Claim 15,
**characterized in that** it is designed according to any one of Claims 2 to 14.

## Revendications

1. Anneau de mise à la terre d'arbre pour décharger les voltages induites, resp. les charges électriques d'un premier élément de machine rotatif (1), de préférence un arbre, dans un deuxième élément de machine fixe (11), comportant un boîtier annulaire (2) constitué d'un matériau électriquement conducteur, qui est connecté électriquement à un des deux éléments de machine (1, 11) et est en connexion électriquement conductrice avec au moins un corps annulaire de décharge (10) qui est au moins partiellement constitué d'un matériau électriquement conducteur et est en connexion électriquement conductrice avec l'autre des deux éléments de machine (1, 11),
**caractérisé en ce que** le corps de décharge (10) a une section annulaire (14), dont dépassent des sections (16, 17), en form de pattes élastiquement déformables, lesquelles ont des longueurs différentes dans la direction radiale et forment des traces de roulement (20, 21) différentes dans la position de montage sur l'élément de machine respectif (1, 11).

2. Anneau de mise à la terre d'arbre selon la revendication 1,
**caractérisé en ce que** les sections (16, 17) sont disposés en étant uniformément répartis sur la circonférence de la section annulaire (14).

3. Anneau de mise à la terre d'arbre selon la revendication 1 ou 2,
**caractérisé en ce que** les sections de longueur inégale (16, 17), qui sont de préférence présents dans au moins deux longueurs différentes, sont disposés alternativement l'un derrière l'autre.

4. Anneau de mise à la terre d'arbre selon une des revendications 1 à 3,
**caractérisé en ce que** les sections (16, 17) de même longueur sont égaux entre eux.

5. Anneau de mise à la terre d'arbre selon une des revendications 1 à 4,
**caractérisé en ce que** les sections (16, 17) font saillie radialement de la section annulaire (14).

6. Anneau de mise à la terre d'arbre selon une des revendications 1 à 5,
**caractérisé en ce que** la section annulaire (14) et les sections (16, 17) sont formés d'une seul piece l'un avec l'autre.

7. Anneau de mise à la terre d'arbre selon une des revendications 1 à 6,
**caractérisé en ce que** les sections (16, 17) en l'état non déformé ont une distance les uns des autres.

8. Anneau de mise à la terre d'arbre selon une des revendications 1 à 7,
**caractérisé en ce que** le corps de décharge (10) est en PTFE électriquement conducteur.

9. Anneau de mise à la terre d'arbre selon une des revendications 1 à 8,
**caractérisé en ce qu'**au moins certains des sections (16, 17) sont pourvus d'un joint (26, 29) qui est avantageusement formé par un affaiblissement en section transversale.

10. Anneau de mise à la terre d'arbre selon une des revendications 1 à 9,
**caractérisé en ce que** les sections (16, 17) ont une forme sensiblement rectangulaire ou substantiellement en forme de T.

11. Anneau de mise à la terre d'arbre selon une des revendications 1 à 10,
**caractérisé en ce que** les sections (16, 17) de longeurs différents ont des contours différents.

12. Anneau de mise à la terre d'arbre selon la revendication 10 ou 11,
**caractérisé en ce que** les sections (16, 17) en forme de T possèdent un travers (22, 27) qui s'étend dans la direction circonférentielle de la section annulaire (14).

13. Anneau de mise à la terre d'arbre selon la revendication 12,
**caractérisé en ce que** les sections courts en forme de T (17) sont situés entre les sections (16) longs en forme de T de telle sorte que les traveres (27) des sections courts (27) soient recouverts radialement par les traveres (22) des sections longs adjacents (16).

14. Anneau de mise à la terre d'arbre selon une des revendications 1 à 13,
**caractérisé en ce que** le corps de décharge (10) est constitué d'un matériau non conducteur et est revêtu pour être conducteur.

15. Corps de décharge annulaire (10) pour un anneau de mise à la terre d'arbre selon une des revendications 1 à 14, constitué d'un matériau au moins partiellement électriquement conducteur, comportant une section annulaire (14),
**caractérisé en ce que** pour former des traces de roulement différentes (20, 21) dans la position de montage sur l'élément de machine respectif (1, 11) de la section annulaire (14) des sections déformables élastiquement, en forme de languette (16, 17) dépassent en saillie à une longueur inégale dans la direction radiale.

16. Corps de drain annulaire selon la revendication 15,
**caractérisé en ce qu'**il présente une configuration selon une des revendications 2 à 14.
